# EUROPEAN PATENT APPLICATION

(11) **EP 1 528 719 A1**
(43) Date of publication of application: **04.05.2005**
(21) Application number: 04256621.6
(22) Date of filing: 27.10.2004
(51) Int. Cl.: H04L 12/28, G10K 15/12, H04R 3/12, H04S 1/00, H04B 1/20

(54) **Data output device, data transmitting device, data processing system, data output method, data transmitting method, data processing method, their programs and recording media storing these programs**

(30) Priority: 28.10.2003 JP 2003367043
(71) Applicant: Pioneer Corporation, Tokyo 153-8654 (JP)
(72) Inventor: Ohkawa, Kenichi c/o Pioneer Corporation, Tokorozawa-shi Saitama 359-8522 (JP)
(74) Representative: Haley, Stephen

(57) **Abstract**

A reproduction controller (433) is provided in a data reproduction unit (430) of audio reproducers (400A, 400B, 400C and 400D), the reproduction controller (433) acquiring an audio data and delay time information about delay times determined by transmission times of the audio data, and causing a data output section (432) to output the audio data at the time based on the acquired delay times of the delay time information. Owing to this, the audio data can be output from the audio reproducers (400A, 400B, 400C and 400D) at the same time.

## Description

The present invention relates to a data output device for outputting data, a data transmitting device for transmitting the data to a plurality of data output devices connected via a network, a data processing system that causes the plurality of data output devices to output the data transmitted from the data transmitting device via the network, a data output method, a data transmitting method, a data processing method, their programs and recording media storing these programs.

Conventionally, a configuration, in which and audio data transmitter for transmitting audio data and an audio reproducer for outputting the audio data transmitted from the audio data transmitter as sounds are connected to each other via a network, is known (refer to for example, Document 1: Japanese Unexamined Patent Publication No. 2001-298444, paragraph No. 0036 and Fig. 1). In the configuration according to the Document 1, a CD player and a tuner as the audio data transmitter and a speaker as the audio reproducer are connected to each other via a serial bus as the network. In such configuration, when a plurality of speakers is connected to the tuner, such configuration that the serial buses are connected from the tuner to each of the speakers is conceivable.

When the serial buses are connected to each of the speakers, which are disposed in different distances from the tuner, it is conceivable such configuration that serial buses having different length corresponding to the distance from the tuner are connected to each of the speakers. However, in the above configuration, when audio data are output synchronously to each of the speakers from the tuner, generally, the transmission time of the audio data is proportional to the length of the serial buses. Accordingly, the times the audio data reach to each of the speakers differ from each other. As a result, sounds output from each of the speakers become asynchronous. Therefore, it is desired to provide such configuration that sounds are output synchronously from each of the speakers.

An object of the present invention is to provide a data output device that can output data transmitted via a network at the same time with other data output devices, a data transmitting device that can cause a plurality of data output devices connected via the network to output the data at the same time, a data processing system that can cause the plurality of data output devices to output the data transmitted from the data transmitting device via the network at the same time, a data output method, a data transmitting method, a data processing method, their programs and recording media storing these programs.

A plurality of data output devices according to an aspect of the present invention for respectively outputting data transmitted via a network, includes: an output information acquirer that acquires the data and delay time information about a delay time determined based on a transmission time of the data; and an output controller that causes the data to be output at the time based on the delay time of the delay time information.

A data transmitting device according to another aspect of the present invention that transmits data via a network to the above-described plurality of data output devices, includes: a transmission time calculating section for calculating a transmission time of the data for each of the data output devices; a delay information generator that generates the delay time information based on the transmission time; and a transmission controller that transmits the data and the delay time information to each of the data output devices via the network.

A data processing system according to still another aspect of the present invention includes: the above-described data output devices; and the above-described data transmitting device connected to the data output devices via the network, in which the output information acquirer acquires the data and the delay time information transmitted from the data transmitting device via the network.

A data processing system according to yet another aspect of the present invention includes: the above-described data output devices; and the above-described data transmitting device connected to the data output devices via the network, in which each of the data output devices include a confirmation information generator that, when receiving the confirmation request information transmitted from the data transmitting device via the network, generates the reception confirmation information and transmits the information to the data transmitting device via the network.

A data output method according to a further aspect of the present invention for outputting data to be transmitted via a network by a plurality of data output devices respectively, the method includes the steps of: acquiring the data and delay time information about a delay time determined based on a transmission time of the data; and outputting the data at the time based on the delay time of the delay time information.

A data transmitting method according to a still further aspect of the present invention for transmitting data via a network to a plurality of data output devices that output the data at the time based on a delay time determined based on a transmission time of the data, the method includes the steps of: calculating the transmission time of the data to each of the data output devices; generating delay time information about the delay time based on the transmission time; and transmitting the data and the delay time information to each of the data output devices via the network.

A data processing method according to a yet further aspect of the present invention for causing data, which is transmitted from a data transmitting device via a network, to be transmitted to each of a plurality of data output devices, the method includes the steps of: operating the data transmitting device to calculate a transmission time of the data to each of the data output devices; operating the data transmitting device to generate delay time information about a delay time determined based on the transmission time; operating the data transmitting device to transmit the data and the delay time information to each of the data output devices via the network; operating each of the data output devices to acquire the data and the delay time information transmitted from the data transmitting device via the network; and operating each of the data output devices to output the data at the time based on the delay time of the delay time information.

A data output program according to a yet further aspect of the present invention executes the above-described data output method by a computer.

A data transmitting program according to a yet further aspect of the present invention executes the above-described data transmitting method by a computer.

A data processing program according to a yet further aspect of the present invention executes the above-described data processing method by a computer.

A recording medium according to a yet further aspect of the present invention stores the above-described data output program in a manner readable by a computer.

A recording medium according to a yet further aspect of the present invention stores the above-described data transmitting program in a manner readable by a computer.

A recording medium according to a yet further aspect of the present invention stores the above-described data processing program in a manner readable by a computer.

In the Drawings;
Fig. 1 is a block diagram schematically showing the configuration of an AV data reproduction system according to an embodiment of the present invention;
Fig. 2 is a block diagram schematically showing the configuration of a data transmitting device in the embodiment;
Fig. 3 is a conceptual diagram schematically showing the configuration of frame data transmitted from the data transmitting device in the embodiment;
Fig. 4 is a conceptual diagram schematically showing the configuration of the frame data in the embodiment;
Fig. 5 is a block diagram schematically showing the configuration of an audio reproducer in the embodiment;
Fig. 6 is a flowchart showing frame data transmitting process in the data transmitting device according to the embodiment; and
Fig. 7 is a flowchart showing frame data receiving process in the audio reproducer according to the embodiment.

Hereinafter, an embodiment of the present invention will be described with reference to the drawings. In the present embodiment, an AV data reproduction system will be exemplified. In the example, a data transmitting device appropriately divides AV (Audio Video) data into a plurality of pieces of data to generate frame data; and based on the generated frame data and the like, the AV data are reproduced by a plurality of data reproducing devices. But the present invention is not limited to the above.

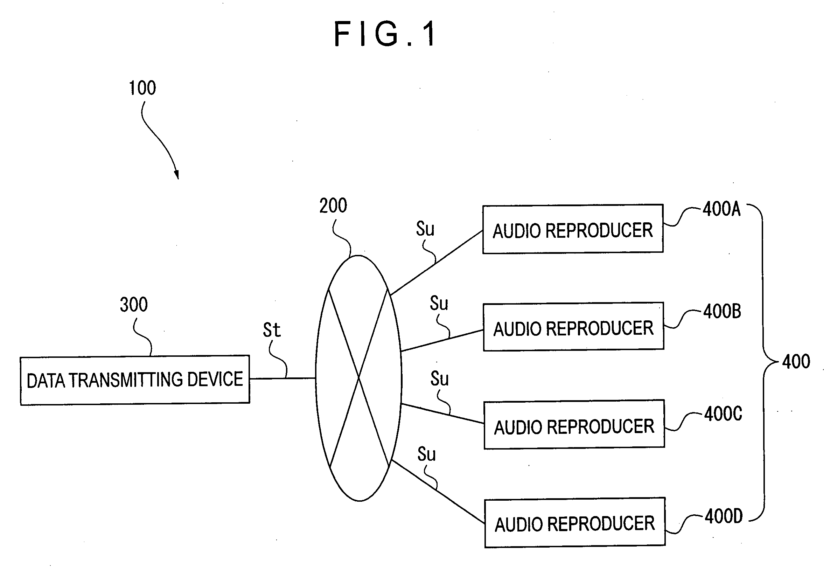

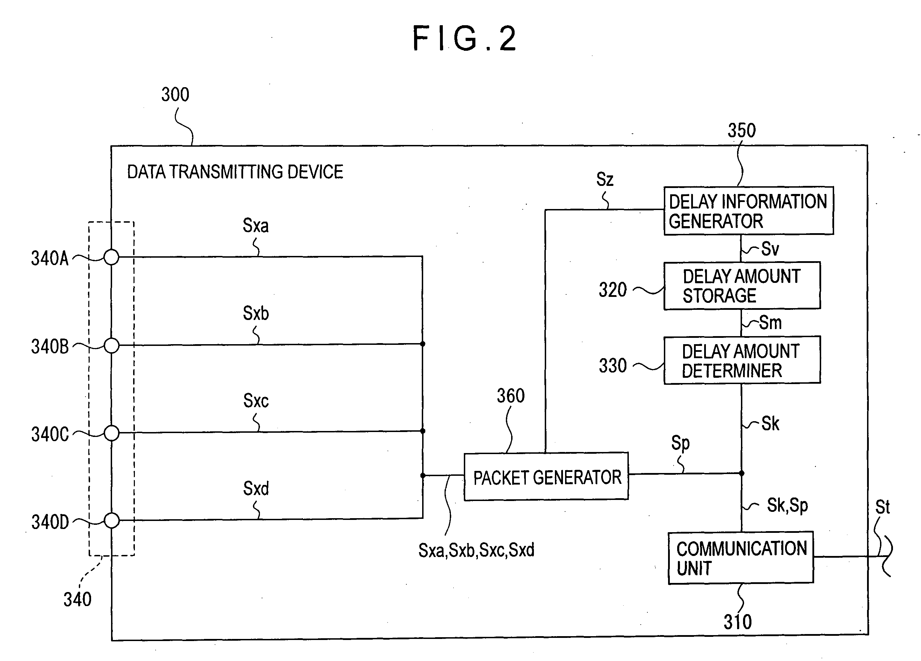

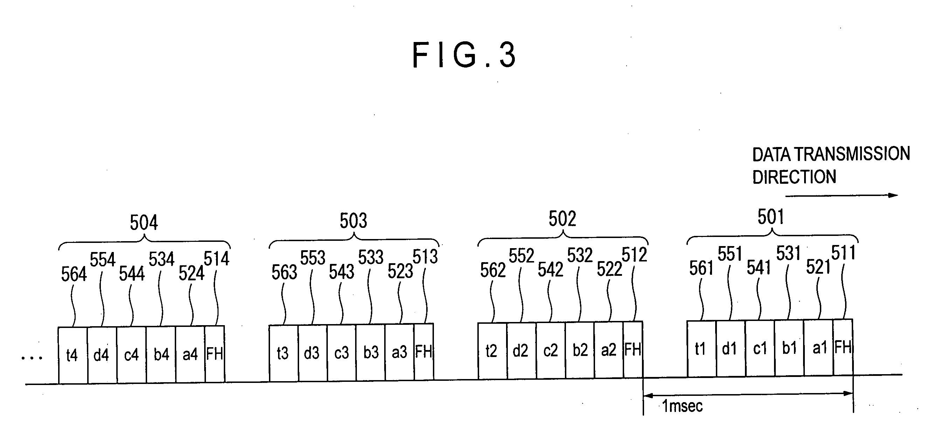

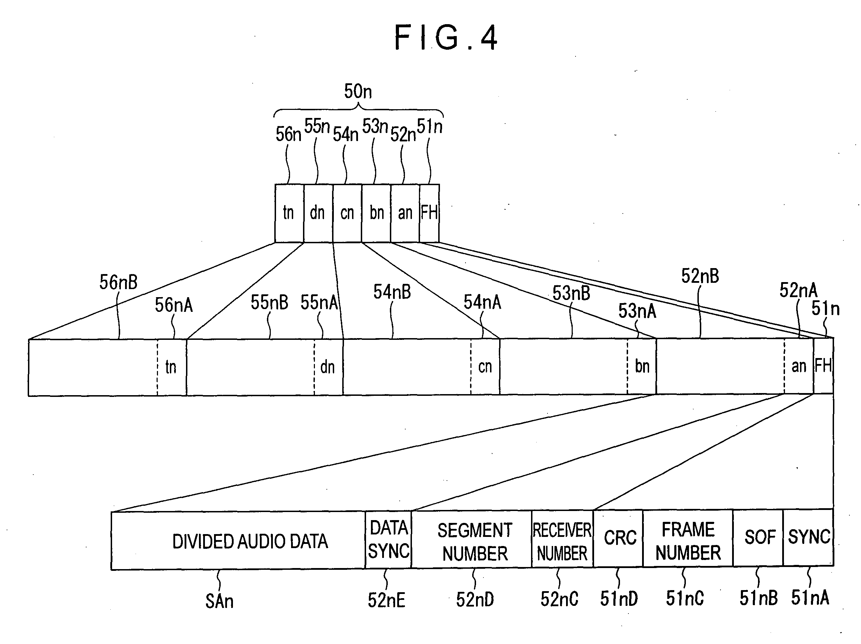

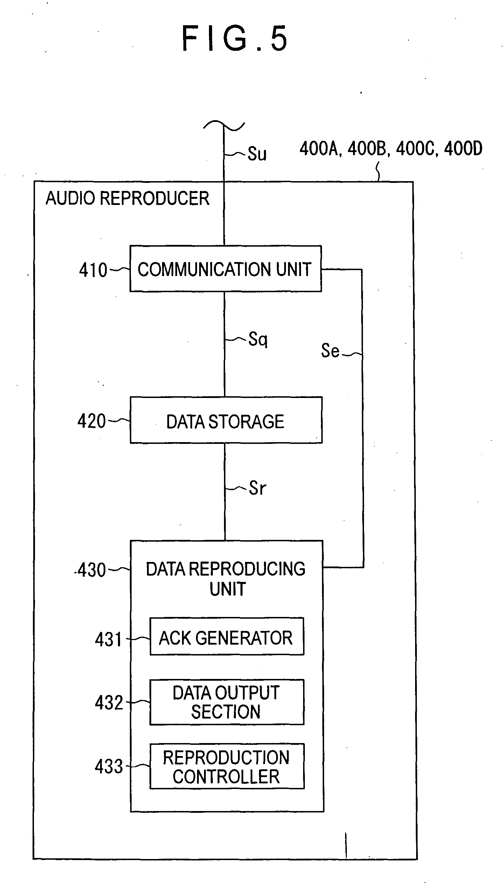

Fig. 1 is a block diagram schematically showing the configuration of the AV data reproduction system according to the embodiment. Fig. 2 is a block diagram schematically showing the configuration of a data transmitting device. Fig. 3 is a conceptual diagram schematically showing the configuration of frame data transmitted from the data transmitting device. Fig. 4 is a conceptual diagram schematically showing the configuration of the frame data. And Fig. 5 is a block diagram schematically showing the configuration of an audio reproducer.

### [Configuration of AV Data Reproduction System]

In Fig. 1, reference numeral 100 denotes an AV data reproduction system as a data processing system. The AV data reproduction system (hereinafter, abbreviated to as reproduction system) 100 is a system for reproducing AV data, which are input from, for example, an unshown AV data output equipment. The reproduction system 100 includes a network 200, a data transmitting device 300, an audio reproducer 400A as a data output device, an audio reproducer 400B as a data output device, an audio reproducer 400C as a data output device, an audio reproducer 400D as a data output device and an unshown image reproducer. Hereinafter, when the audio reproducers 400A, 400B, 400C and 400D are described as a collective, these reproducers will be occasionally referred to as audio reproducer set 400. Also, in this embodiment, a configuration will be exemplified in which the audio reproducer set 400 includes four audio reproducers. But if the number of the audio reproducer is a plural number, the number of the audio reproducer in the audio reproducer set 400 is not limited to four, but the number thereof may be five or more, or three or two.

The network 200 is connected to a data transmitting device 300, the audio reproducers 400A, 400B, 400C and 400D, and the image reproducer. The network 200 connects the data transmitting device 300, the audio reproducer set 400 and the image reproducer in a state that information can be transmitted and received. As the network 200, for example, LAN (Local Area Network) such as intranet, extranet and Ethernet (TM) based on multipurpose protocol suite such as TCP/IP (Transmission Control Protocol/Internet Protocol), a radio LAN complying IEEE (Institute of Electrical and Electronics Engineers) 802.1 X-Standard, a radio transmission network employing Bluetooth (TM), which is a near field communication and protocol, a network such as communication line network and broadcast network in which a plurality of base stations capable of transmitting and receiving information via radio medium form a network, and further, radio medium itself or cable medium itself which serves as a medium for directly transmitting and receiving information among the data transmitting device 300, the audio reproducers 400A, 400B, 400C, 400D and the image reproducer are exemplified. Here, as the radio medium, any of the media such as electric wave, light, acoustic wave, electromagnetic wave is applicable. Also, as the cable medium, any medium such as cable, electricity wire, telephone cable complying with USB (Universal Serial Bus) standard and/or IEEE 1394 standard is applicable.

The data transmitting device 300 appropriately processes audio data SA, SB, SC and SD as the data of the AV data, which are input from the AV data output equipment, and transmits the data timely to the audio reproducers 400A, 400B, 400C and 400D. These audio data SA, SB, SC and SD are the data, for example, in one music composition, which are output as the sound respectively from the audio reproducers 400A, 400B, 400C and 400D. Also, the data transmitting device 300 appropriately processes the image data of the AV data, which are input from the AV data output equipment, and transmits the data timely to the image reproducer. As shown in Fig. 2, the data transmitting device 300 includes a communication unit 310, a delay amount storage 320 as a storage, a delay amount determiner 330 as a transmission time calculating section, an audio data input unit 340 as a data acquiring section, a delay information generator 350 as a delay information generating section, a packet generator 360 as a transmission controller, an unshown image data transmitter, and the like.

The communication unit 310 is connected to the audio reproducers 400A, 400B, 400C, 400D and the image reproducer via the network 200; and further, connected to the delay amount determiner 330 and the packet generator 360. The communication unit 310 is capable of receiving a transmission signal St from the audio reproducer set 400 and the image reproducer via the network 200. When acquiring the transmission signal St, the communication unit 310 carries out a preset input interface processing to output a determination signal Sk to the delay amount determiner 330, or a packet signal Sp to the packet generator 360. Also, when acquiring the determination signal Sk from the delay amount determiner 330 or the packet signal Sp from the packet generator 360, the communication unit 310 carries out a preset output interface to transmit the signal as the transmission signal St timely to the audio reproducer set 400 via the network 200. Further, when acquiring an image data signal from the image data transmitter, the communication unit 310 carries out a preset output interface to transmit the signal as an image data transmission signal timely to the image reproducer via the network 200.

The delay amount storage 320 is connected to the delay amount determiner 330 and the delay information generator 350. The delay amount storage 320 stores various kinds of information about the transmission time of the audio data to the audio reproducer set 400, which is generated by the delay amount determiner 330, so as to be read out timely. As for the delay amount storage 320, a DRAM (Dynamic Random Access Memory) or SRAM (Static Random Access Memory) is exemplified. Also, the delay amount storage 320 stores various kinds of programs and the like for controlling the operation of the entire data transmitting device 300.

The delay amount determiner 330 is a program. The delay amount determiner 330 generates various kinds of information about the transmission time of the audio data to the audio reproducer set 400, and causes the delay amount storage 320 to store the generated various kinds of information. Specifically, the delay amount determiner 330 generates ACK request information as confirmation request information, which requests on the audio reproducer set 400 to transmit an ACK (Acknowledge) as reception confirmation information, which will be described later. And the delay amount determiner 330 appropriately converts the ACK request information to the determination signal Sk, and outputs the signal to the communication unit 310. In the following description, the processing to output the ACK request information will be occasionally referred to as processing to carry out polling.

After that, based on the determination signal Sk input from the communication unit 310, the delay amount determiner 330 recognizes the ACK written in the determination signal Sk. And the delay amount determiner 330 recognizes that the device, which has transmitted the ACK, for example, is the audio reproducer 400A, based on the inherent information-to-device written in the ACK, which will be described later. Further, the delay amount determiner 330 recognizes necessary time from a time when the ACK request information is output to a time when the ACK is acquired based on the time measured by an unshown timer, and recognizes a half value of the recognized necessary time as a delay time Da for the transmission time of the audio reproducer 400A. The delay amount determiner 330 appropriately converts the recognized delay time Da to a memory signal Sm, and causes the delay amount storage 320 to store the signal so as to be read out appropriately. Further, the delay amount determiner 330 carries out the same processing as the above to recognize the delay times Db, Dc and Dd as the transmission time of the audio reproducers 400B, 400C and 400D, and appropriately converts the recognized delay times Db, Dc and Dd to the memory signals Sm, and causes the delay amount storage 320 to store the signals so as to be read out appropriately. Hereinafter, when the delay times Da, Db, Dc and Dd are described as a collective, these delay times will be occasionally referred to as delay times Dz.

When the delay amount determiner 330 recognizes that all of the delay times Da, Db, Dc and Dd have been stored in the delay amount storage 320, the delay amount determiner 330 reads out the delay times Da, Db, Dc and Dd stored in the delay amount storage 320 as the memory signals Sm. After that, the delay amount determiner 330 determines the delay time, which has the longest time in the read out delay times Da, Db, Dc and Dd as a reference time Dx. The delay amount determiner 330 calculates a difference between the reference time Dx and, for example, the delay time Da, and recognizes the calculated value as the differential time Ta of the audio reproducer 400A. After that, the delay amount determiner 330 appropriately converts the recognized differential time Ta to a memory signal Sm and causes the delay amount storage 320 to store the memory signal Sm so as to be read out timely. Further, the delay amount determiner 330 carries out the same processing as the above; thereby, it calculates the differential times Tb, Tc and Td of the audio reproducers 400B, 400C and 400D, appropriately, converts these calculated differential times Tb, Tc and Td to the memory signals Sm, and causes the delay amount storage 320 to store so as to be read out timely. Hereinafter, when the differential times Ta, Tb, Tc and Td are described as a collective, these differential times will be occasionally referred to as differential times Tz.

The delay amount determiner 330 timely acquires current time from the timer. When the delay amount determiner 330 recognizes that a preset time Ts has passed, the delay amount determiner 330 deletes the delay times Dz and the differential times Tz stored in the delay amount storage 320. Hereinafter, when the delay times Dz and the differential times Tz are described as a collective, these delay times Dz and the differential times Tz will be occasionally referred to as transmission time information.

The audio data input unit 340 includes an audio input terminal 340A, an audio input terminal 340B, an audio input terminal 340C and an audio input terminal 340D. The audio input terminal 340A includes, for example; a connector, which is connected detachably with not shown plug, a terminal, which is connected with a lead wire, and the like. An AV data output equipment, which outputs the AV data, is connected detachably to the audio input terminal 340A, and output signal Sxa, which is written with audio data SA of the AV data to be output from the AV data output equipment, is input therefrom. The audio input terminals 340B, 340C and 340D are also constituted in the same manner as the audio input terminal 340A. To these audio input terminals 340B, 340C and 340D, the output signals Sxb, Sxc and Sxd written with the audio data SB, SC and SD of the AV data, which are output synchronously along with the output signal SA from the AV data output equipment, are input respectively.

The delay information generator 350 is a program. The delay information generator 350 generates delay time information based on the differential times Tz stored in the delay amount storage 320, and outputs the information to the packet generator 360. Specifically, when recognizing that the differential times Tz have been stored in the delay amount storage 320, the delay information generator 350 reads out the differential times Tz as a memory signal Sv respectively. For example, the delay information generator 350 then generates information for requesting on the audio reproducer 400A to output the divided audio data SA1, which is a header portion of the audio data SA, at the time when the predetermined time U and the differential time Ta have passed from the time when the frame data 501 stored with the packet data 521 (described later) is acquired. Additionally, the delay information generator 350 generates information for requesting on the audio reproducer 400B to output the divided audio data SB1, which is a header portion of the audio data SB, when the predetermined time U and the differential time Tb have passed from the time when the frame data 501 stored with the packet data 531 (described later) are acquired. Still additionally, the delay information generator 350 generates information for requesting on the audio reproducer 400C to output the divided audio data SC1, which is a header portion of the audio data SC, at the time when the predetermined time U and the differential time Tc have passed from the time when the frame data 501 stored with the packet data 541 (described later) are acquired. Further, the delay information generator 350 generates information for requesting on the audio reproducer 400D to output the divided audio data SD1, which is a header portion of the audio data SD, at the time when the predetermined time U and the differential time Td have passed from the time when the frame data 501 stored with the packet data 551 (described later) are acquired. Finally, the delay information generator 350 generates delay time information having these various kinds of information generated in the above-described manner. After that, the generated delay time information is appropriately converted to a process signal Sz and output to the packet generator 360.

The packet generator 360 is a program. This packet generator 360 is connected to audio input terminals 340A, 340B, 340C and 340D. The packet generator 360 sequentially generates frame data 50n, 50(n+1), ... (n is a natural number) as shown in Fig. 3, based on the audio data SA, SB, SC and SD input from the audio input terminals 340A, 340B, 340C and 340D and the delay time information input from the delay information generator 350, and transmits the data to the audio reproducer set 400.

Here, first of all, the configuration of the frame data 50n will be described. As shown in Fig. 4, the frame data 50n includes a frame header 51n (n is a natural number), a packet data 52n (n is a natural number), a packet data 53n (n is a natural number), a packet data 54n (n is a natural number), a packet data 55n (n is a natural number) and a delay packet data 56n (n is a natural number). The packet data 52n, 53n, 54n and 55n have substantially the same configuration with each other. Therefore, the packet data 52n will be described in detail below.

In the frame header 51n, various kinds of information about the frame data 50n are stored. Specifically, the frame header 51n stores sync (synchronous) 51nA (n is a natural number), which is a signal for synchronizing, SOF (Start Of Frame) 51nB (n is a natural number) indicating the head of the frame data 50n, frame number 51nC (n is a natural number) indicating that the frame data 50n are the n-th frame data, and CRC (Cyclic Redundancy Check character) 51nD (n is a natural number), which is a signal for detecting transmission error.

The packet data 52n are data used for output processing of the audio data SA in the audio reproducer 400A. The packet data 52n includes a segment-determining data area 52nA in which information about the packet data 52n is stored, and an AV data area 52nB in which information about the audio data SA to be output by the audio reproducer 400A is stored. Specifically, in the AV data area 52nB, divided audio data SAn (n is a natural number) as a divided data, which are a partial data of the audio data SA, and data sync (Data Synchronous) 52nE, which is a signal indicating the start of the divided audio data SAn, are stored. In the segment-determining data area 52nA, receiver number 52nC, which is, for example, an ID (Identification) number for identifying the audio reproducer 400A, and segment number 52nD as order information indicating that the divided audio data SAn are the n-th data from the head of the audio data SA are stored.

The packet data 53n, 54n and 55n are the data used for output processing of the audio data SB, SC and SD in the audio reproducers 400B, 400C and 400D. The packet data 53n, 54n and 55n include, the segment-determining data area 53nA, 54nA and 55nA stored with, same as the segment-determining data area 52nA, various kinds of information, and AV data area 53nB, 54nB and 55nB stored with, same as the AV data area 52nB, various kinds of information such as, for example, divided audio data SBn (n is a natural number), SCn (n is a natural number) and SDn (n is a natural number) as the divided data.

The delay packet data 56n is stored with the various kinds of information about the delay time information. The delay packet data 56n includes a delay information storage area 56nA stored with the delay time information, and a sync area 56nB stored with a delay information sync (Synchronous) as a signal indicating the start of the delay time information.

Incidentally, the configuration of the frame data 50n is not limited to the above-described configuration, but another appropriate configuration may be employed.

Next, the process to generate the frame data 50n in the packet generator 360 will be described.

When acquiring output signals Sxa, Sxb, Sxc and Sxd simultaneously input from the audio input terminals 340A, 340B, 340C and 340D, the packet generator 360 recognizes the audio data SA, SB, SC and SD written in the acquired output signals Sxa, Sxb, Sxc and Sxd. Then, the packet generator 360 reads out the data of the predetermined data amount from the head position of, for example, the audio data SA. After that, data sync 521E, receiver number 521C and segment number 521D corresponding to the divided audio data SA1 are generated respectively, and packet data 521, which store these various kinds of information, are generated. Also, the packet generator 360 recognizes the audio data SB, SC and SD written in the acquired output signals Sxb, Sxc and Sxd. And the packet generator 370 carries out the same processing as the above to generate the packet data 521, and generates the packet data 531, 541 and 551 stored with the divided audio data SB1, SC1 and SD1 respectively.

Further, when acquiring the process signal Sz input from the delay information generator 350, the packet generator 360 recognizes the delay time information written in the acquired process signal Sz and generates the delay information sync. Owing to this, the packet generator 360 generates a delay packet data 561 stored with the delay time information and the delay information sync.

Further, the packet generator 360 generates a frame header 511. And frame data 501, which store the generated frame header 511, packet data 521, 531, 541 and 551 and delay packet data 561, are generated, and the generated frame data 501 are timely converted to a packet signal Sp and output to the communication unit 310. In the following description, the time when the frame data 501 are output will be occasionally referred to as frame output time.

Then, the packet generator 360 carries out the same processing as described above; thereby, the frame data 502 are generated and output to the communication unit 310, for example, 1 msec later from the frame output time. Specifically, for example, the data of the predetermined data amount are read out as the divided audio data SA2 from the tail position of the divided audio data SA1 in the audio data SA. And packet data 522, which stores the read out divided audio data SA2 and the like, are generated. Further, the packet generator 360 carries out the same processing to generate packet data 532, 542 and 552 stored with the divided audio data SB2, SC2 and SD2 and the like. Further, in the case that the process signal Sz is newly input from the delay information generator 350, the packet generator 360 generates a delay packet data 562 stored with the delay time information written in the input process signal Sz, whereas, in the case that the process signal Sz is not newly input therefrom, the packet generator 360 generates a packet data 562 stored with the delay time information written in the process signal Sz, which is input at the latest timing. Further, the packet generator 360 generates a frame header 512. And frame data 502, which store the frame header 512, packet data 522, 532, 542 and 552 and delay packet data 562, are generated, and the generated frame data 502 are timely converted to a packet signal Sp and output to the communication unit 310. And the packet generator 370 converts the generated frame data 502 to the packet signal Sp and outputs the signal to the communication unit 310 1 msec later from the frame output time.

After that, the packet generator 360 generates the frame data 503, 504, ... sequentially, and outputs these generated frame data 503, 504, ... sequentially to the communication unit 310 every 1 msec. Here, the configuration in which the frame data 50n are output every 1 msec, is exemplified. However, the configuration is not limited to the above. For example, such configuration that the frame data 50n are output every 5 msec or 10 msec may be adopted.

The audio reproducers 400A, 400B, 400C and 400D are connected to the data transmitting device 300 via the network 200 so that various kinds of information can be transmitted and received therebetween. Since the audio reproducers 400A, 400B, 400C and 400D have the same configuration each other, the audio reproducer 400A will be described below.

The audio reproducer 400A acquires the frame data 50n, which are transmitted from the data transmitting device 300, and outputs the audio data SA appropriately based on the acquired frame data 50n. As shown in Fig. 5, the audio reproducer 400A includes a communication unit 410, a data storage 420, a data reproducing unit 430 and the like.

The communication unit 410 is connected to the data transmitting device 300 via the network 200 as well as the data storage 420 and the data reproducing unit 430. The communication unit 410 receives a reception signal Su from the data transmitting device 300 via the network 200. When the frame data 50n are written in the received reception signal Su, the frame data 50n are appropriately converted to memory signals Sq and output to the data storage 420. When ACK request information is written in the received reception signal Su, the ACK request information is appropriately converted to reproduction signal Se and output to the data reproducing unit 430. Also, when the communication unit 410 acquires the reproduction signal Se from the data reproducing unit 430, the communication unit 410 carries out a preset output interface to transmit the reception signal Su to the data transmitting device 300 via the network 200.

The data storage 420 is connected to the data reproducing unit 430. The data storage 420 stores the frame data 50n so as to be read out appropriately. As for the data storage 420, a DRAM (Dynamic Random Access Memory), a SRAM (Static Random Access Memory), or the like may be exemplified. Also, the data storage 420 stores various kinds of programs and the like for controlling the operation of the entire audio reproducer 400A.

The data reproducing unit 430 includes a various kinds of programs such as an ACK (Acknowledge) generator 431 as an confirmation information generator, a data output section 432 and a reproduction controller 433 as an output information acquirer and an output controller, a frame data receiver, a divided data acquiring section and a data generator.

The ACK generator 431 generates, so to speak, an ACK, which is a piece of information indicating the fact that ACK request information transmitted from the data transmitting device 300 has been acquired. Specifically, based on the reproduction signal Se input from the communication unit 410, the ACK generator 431 recognizes the ACK request information written in the reproduction signal Se. And the ACK generator 431 generates ACK including information indicating the fact that the ACK request information has been acquired, the inherent information-to-device for identifying the audio reproducer 400A and the like. After that, the generated ACK is appropriately converted to a reproduction signal Se and output to the communication unit 410.

The data output section 432 has a sound generator such as, for example, unshown speaker. The data output section 432 is controlled by the reproduction controller 433 to output audio data SA as sounds via the sound generator.

The reproduction controller 433 timely reads out the divided audio data SAn, SA(n+1), ... stored with the frame data 50n, 50(n+1), ... stored in the data storage 420, and the delay time information. The reproduction controller 433 timely carries out a processing to combine these read out divided audio data SAn, SA(n+1), ... with each other and controls the data output section 432 to output the data as the audio data SA, based on the time corresponding to the delay time information. Specifically, the reproduction controller 433 timely reads out the frame data 50n, 50(n+1), ... stored in the data storage 420 as a memory signal Sr. Based on the receiver numbers 52nC, 52(n+1)C, ... of the read out frame data 50n, 50(n+1), ..., the packet data 52n, 52(n+1), ... are identified and appropriately acquired. Further, the delay packet data 56n, 56(n+1), ... stored in the frame data 50n, 50(n+1), ... are acquired. After that, the divided audio data SAn, SA(n+1), ... are appropriately combined with each other based on the order indicated in the segment numbers 52nD, 52(n+1)D, ... of the packet data 52n, 52(n+1), ..., and causes the data output section 432 to output the data as the audio data SA at the time written in the delay time information stored in the delay packet data 56n, 56(n+1), ... .

The image reproducer is connected to the data transmitting device 300 via the network 200 so that various kinds of information can be transmitted and received therebetween. The image reproducer includes an unshown communication unit, a data storage, a data reproducing unit and the like. The communication unit acquires image data transmitted from the data transmitting device 300, and causes the data storage to store the data so as to be read out timely. The data reproducing unit timely reads out the image data stored in the data storage to output the image.

### [Operation of AV Data Reproduction System]

Next, the operation of the reproduction system 100 will be described with reference to the related drawings. In the following description, a case where the delay time Da of the audio reproducer 400A is 4 msec; the delay time Db, Dd of the audio reproducers 400B and 400D is 5 msec; and the delay time Dc of the audio reproducer 400C is 3 msec, will be exemplified.

### (Frame Data Transmitting Process in Data Transmitting Device)

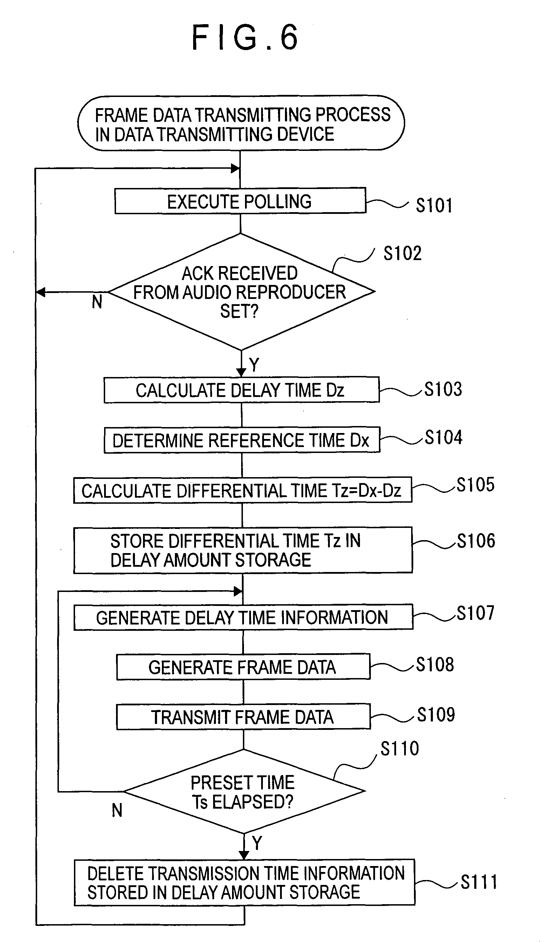

First of all, as the operation of the reproduction system 100, the transmission process of the frame data 50n in the data transmitting device 300 will be described with reference to Fig. 6. Fig. 6 is a flowchart showing the frame data transmitting process in the data transmitting device.

As shown in Fig. 6, a user turns ON the power supply for the reproduction system 100 to supply the power. When the power is supplied, the delay amount determiner 330 of the data transmitting device 300 generates the ACK request information, and carries out the processing to transmit the generated ACK request information to the audio reproducer set 400; i.e., the polling (step S101). Here, the configuration in which the polling is carried out immediately after the power is supplied, is exemplified. However, the configuration is not limited to the above. For example, such configuration in which the polling is not carried out immediately after the power is supplied; but for example, when a setting input requesting to carry out the polling is made by the user, the polling is carried out, may be employed.

After that, the delay amount determiner 330 carries out the processing to determine whether or not the ACKs have been received from the audio reproducer set 400 (step S102).

In step S102, when it is determined that the ACKs have not been received from audio reproducer set 400, the processing returns to step S101.

On the other hand, in step S102, when it is determined that the ACKs have been received from the audio reproducer set 400, the delay amount determiner 330 calculates the delay times Dz based on the necessary time from a point when the polling is carried out to a point when the respective ACKs of the audio reproducers 400A, 400B, 400C and 400D are acquired (step S103). And the calculated delay times Dz are stored in the delay amount storage 320 so as to be read out timely.

Then, when the delay amount determiner 330 recognizes that delay times Dz have been stored in the delay amount storage 320, the delay amount determiner 330 determines the longest delay time in the stored delay times Dz as the reference time Dx (step S104). Here, 5 msec of the delay times Db and Dd is determined as the reference times Dx.

After that, the delay amount determiner 330 calculates the differential times Tz of the audio reproducers 400A, 400B, 400C and 400D based on the delay times Dz calculated in step S103 and the reference times Dx determined in step S104 (step S105). Here the differential time Ta is 1 msec; the differential times Tb and Td are 0 msec; and the differential time Tc is 2 msec. And these calculated differential times Tz are stored in the delay amount storage 320 so as to be read out timely (step S 106).

After that, the data transmitting device 300, with the use of the delay information generator 350, generates the delay time information based on the differential times Tz stored in the delay amount storage 320 (step S107). Here, such delay time information are generated, which include information that requests on the audio reproducer 400A to output the divided audio data SA1 at the time when the predetermined time U and the differential time Ta have passed from the time when the frame data 501 are acquired, i.e., at the time when the predetermined time U and 1 msec have passed from a time when the frame data 501 are acquired; information that request on the audio reproducers 400B and 400D to respectively output the divided audio data SB1 and SD1 at the time when the predetermined time U and the differential times Tb and Td have passed from the time when the frame data 501 are acquired, i.e., at the time when the predetermined time U has passed from the time when the frame data 501 are acquired; and information that requests on the audio reproducer 400C to output the divided audio data SC1 at the time when the predetermined time U and the differential time Tc have passed from the time when the frame data 501 are acquired, i.e., at the time when the predetermined time U and 2 msec have passed from the time when the frame data 501 are acquired.

The data transmitting device 300 generates the frame data 501, 502, ... as shown in Fig 3 based on the delay time information generated in step S107 and the audio data SA, SB, SC and SD input from the audio data input unit 340 (step S108). And the generated frame data 501, 502, ... are transmitted to the audio reproducers 400A, 400B, 400C and 400D, for example, every 1 msec (step S109).

After that, the data transmitting device 300 determines whether or not the time since, for example, the delay times Dz are calculated has exceeded 5 minutes, which is a preset time Ts previously set, with the use of the delay amount determiner 330 (step S110). Here, the configuration, in which it is determined whether or not that the time from the delay times Dz are calculated has exceeded the preset time Ts, is exemplified. The configuration is not limited to the above. Such configuration that, for example, it is determined whether or not that the time from the time when the differential times Tz are stored in the delay amount storage 320 or the time when the polling is carried out or the like has exceeded the preset time Ts, may be employed. Also, such configuration that the preset time Ts is 5 minutes is exemplified. However, the configuration is not limited to the above. For example, the preset time Ts may be set to 10 minutes or 30 minutes.

In step S110, when the delay amount determiner 330 determines that the preset time Ts has not passed, the processing returns to step S107. On the other hand, in step S110, when the delay amount determiner 330 determines that the preset time Ts has passed, the transmission time information stored in the delay amount storage 320, i.e., the delay times Dz and the differential times Tz are deleted (step S111). Then, the processing returns to step S101, and carries out the polling again.

### (Frame Data Receiving Process in Audio Reproducer)

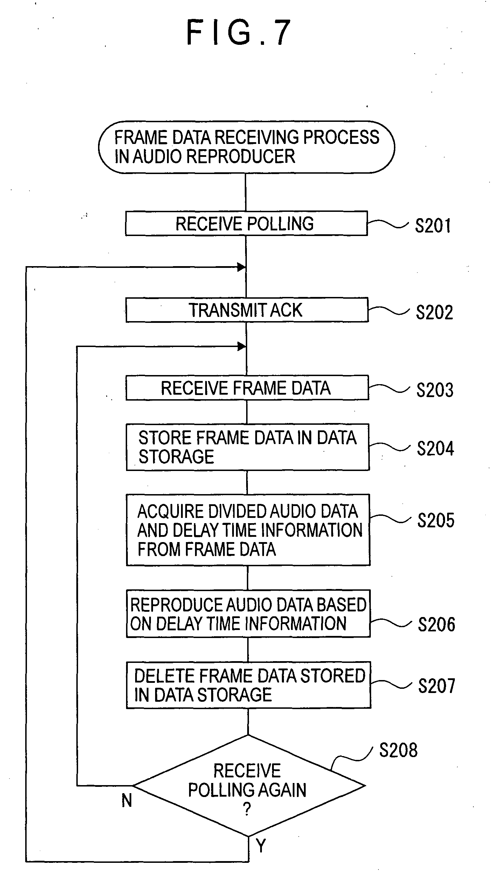

Next, as the operation of the reproduction system 100, the reception processing of the frame data 50n in the audio reproducer set 400 will be described with reference to Fig. 7. Fig. 7 is a flowchart showing the frame data receiving process in the audio reproducer.

As shown in Fig. 7, for example, when the audio reproducer 400A recognizes that the ACK generator 431 has received ACK request information; i.e., a polling, which is transmitted from the data transmitting device 300 (step S201), the audio reproducer 400A generates an ACK. The generated ACK is transmitted to the data transmitting device 300 (step S202). The audio reproducers 400B, 400C and 400D also carry out the processing from step S201 to step S203.

After that, when the communication unit 410 receives the frame data 501, 502, ... shown in Fig. 3, which are transmitted from the data transmitting device 300 (step S203), the audio reproducers 400A, 400B, 400C and 400D cause the data storage 420 to store the received frame data 501, 502, ... so as to be read out timely (step S204). As described above, the frame data 501, 502, ... are transmitted from the data transmitting device 300 at 1 msec intervals from the frame output time. Since the delay time Da is 4 msec; the delay times Db and Dd are 5 msec; and the delay time Dc is 3 msec, the audio reproducer 400C receives the frame data 501, 3 msec later from the frame output time; the audio reproducer 400A receives the frame data 501, 4 msec later from the frame output time; and the audio reproducers 400B and 400D receive the frame data 501, 5 msec later from the frame output time. After that, the audio reproducers 400A, 400B, 400C and 400D receive the frame data 502, 503, ... sequentially every 1 msec.

And, for example, when the reproduction controller 433 recognizes that the frame data 501, 502, ... have been stored in the data storage 420, the audio reproducer 400A timely acquires the divided audio data SA1, SA2, ... stored in the frame data 501, 502, ... and the delay time information (step S205). The audio data SA are reproduced based on the acquired divided audio data SA1, SA2, ... and the delay time information (step S206).

Specifically, based on the receiver numbers 521C, 522C, ... , the audio reproducer 400A acquires the packet data 521, 522, ... timely from the frame data 501, 502, ... using the reproduction controller 433. Additionally, the audio reproducer 400A appropriately acquires the delay time information from the frame data 501, 502, ... . Then, the reproduction controller 433 acquires the divided audio data SA1, SA2, ... based on the segment numbers 521D, 522D, ... of the acquired packet data 521, 522, ... , and properly combines these divided audio data SA1, SA2, ... with each other in accordance with the predetermined order. The reproduction controller 433 causes the data output section 432 to output the divided audio data SA1, which is the header portion of the audio data SA, as sounds at the time written in the delay time information. In other words, the reproduction controller 433 starts the reproduction processing of the audio data SA. After that, the data output section 432 is made to output the divided audio data SA2 combined with the tail position of the divided audio data SA1, the divided audio data SA3 combined with the tail position of the divided audio data SA2, and the like successively. Owing to this, the audio data SA are output from the data output section 432. Note that, information written in the delay time information is the one that requests to output the audio data SA at the time when the predetermined time U and 1 msec have passed from the time when the frame data 501 are acquired. Additionally, as described above, the audio reproducer 400A has been acquired the frame data 501, at the time when 5 msec has passed from the frame output time. Accordingly, the audio reproducer 400A starts the reproduction processing of the audio data SA at the time when the predetermined time U and 5 msec have passed from the frame output time, with the use of the reproduction controller 433.

The audio reproducers 400B, 400C and 400D also carry out the processing step S205 and step S206.

Specifically, the audio reproducer 400B appropriately acquires the divided audio data SB1, SB2, ... stored in the frame data 501, 502, ... and the delay time information, with the use of the reproduction controller 433. Next, the reproduction controller 433 appropriately combines the divided audio data SB1, SB2, ... with each other in accordance with the predetermined order. The audio reproducer 400B causes the data output section 432 to output the divided audio data SB1, which is the header portion of the audio data SB, as sounds at the time written in the delay time information. In other words, the reproduction controller 433 starts the reproduction processing of the audio data SB. Note that, information written in the delay time information is the one that requests to output the audio data SB at the time when the predetermined time U has passed from the time when the frame data 501 are acquired. Additionally, as described above, the audio reproducer 400B acquires the frame data 501, at the time when 5 msec has elapsed from the frame output time. Accordingly, the audio reproducer 400B starts the reproduction processing of the audio data SB at the time when the predetermined time U and 5 msec have passed from the frame output time, with the use of the reproduction controller 433.

Further, the audio reproducer 400C appropriately acquires the divided audio data SC1, SC2, ... stored in the frame data 501, 502, ... and the delay time information, with the use of the reproduction controller 433. Next, the reproduction controller 433 appropriately combines the divided audio data SC1, SC2, ... with each other in accordance with the predetermined order. The audio reproducer 400C then causes the data output section 432 to output the divided audio data SC1, which is the header portion of the audio data SC, as sounds at the time written in the delay time information. In other words, the reproduction controller 433 starts the reproduction processing of the audio data SC. Note that, information written in the delay time information is the one that requests to output the audio data SC at the time when the predetermined time U and 2 msec have passed from the time when the frame data 501 are acquired. Additionally, as described above, the audio reproducer 400C acquires the frame data 501, at the time when 3 msec has passed from the frame output time. Accordingly, the audio reproducer 400C starts the reproduction processing of the audio data SC at the time when the predetermined time U and 5 msec have passed from the frame output time, with the use of the reproduction controller 433.

Further, the audio reproducer 400D appropriately acquires the divided audio data SD1, SD2, ... stored in the frame data 501, 502, ... and the delay time information, with the use of the reproduction controller 433. Next, the reproduction controller 433 appropriately combines the divided audio data SD1, SD2, ... with each other in accordance with the predetermined order. The audio reproducer 400D then causes the data output section 432 to output the divided audio data SD1, which is the header portion of the audio data SD, as sounds at the time written in the delay time information. In other words, the reproduction controller 433 starts the reproduction processing of the audio data SD. Note that, information written in the delay time information is the one that requests to output the audio data SD at the time when the predetermined time U has passed from the time when the frame data 501 are acquired. Additionally, as described above, the audio reproducer 400D acquires the frame data 501, at the time when 5 msec has elapsed from the frame output time. Accordingly, the audio reproducer 400D starts the reproduction processing of the audio data SD at the time when the predetermined time U and 5 msec have passed from the frame output time, with the use of the reproduction controller 433.

After that, for example, the audio reproducer 400A timely deletes the frame data 501, 502, ... stored in the data storage 420 using the reproduction controller 433 (step S207). And the audio reproducer 400A determines whether or not the ACK generator 431 has received the polling again (step S208).

In step S208, when it is determined that the polling has been received, the processing returns to step S202 and an ACK is generated and transmitted to the data transmitting device 300. And the processing from step S203 to step S208 is carried out.

On the other hand, in step S208, when it is determined that the polling has not been received, the processing returns to step S203 and the audio reproducer 400A receives the frame data 50n transmitted from the data transmitting device 300 using the communication unit 410. And the processing from step S204 to step S208 is carried out.

The audio reproducers 400B, 400C and 400D also carry out the processing step S207 and step S208.

According to the above-described embodiment, the data transmitting device 300 in the reproduction system 100 calculates the delay time Da of the audio reproducer 400A as, for example, 4 msec; the delay time Db and Dd of the audio reproducers 400B and 400D as, for example, 5 msec; and the delay time Dc of the audio reproducer 400C as, for example, 3 msec using the delay amount determiner 330. And based on the delay times Dz, the differential time Ta of the audio reproducer 400A is calculated as 1 msec; the differential times Tb and Td of the audio reproducers 400B and 400D are calculated as 0 msec; and the differential time Tc of the audio reproducer 400C is calculated as 2 msec. After that, the delay information generator 350 generates the output request information based on the differential times Tz. More specifically, the delay information generator 350 generates such delay time information, including information that requests on the audio reproducer 400A to output the divided audio data SA1 at the time when the predetermined time U and 1 msec, which is the differential time Ta, have passed from the time when the packet data 521 are acquired; information that request on the audio reproducers 400B and 400D to output the divided audio data SB1 and SD1 at the time when the predetermined time U and 0 msec, which is the differential times Tb and Td, have passed from the time when the packet data 531 and 551 are acquired; and information that requests on the audio reproducer 400C to output the divided audio data SC1 at the time when the predetermined time U and 2 msec, which is the differential time Tc, have passed from the time when the packet data 541 are acquired. Then, the packet data 521, 531, 541 and 551 stored with the divided audio data SA1, SB1, SC1 and SD1, and the delay time information are transmitted to the audio reproducer set 400.

Consequently, the audio reproducers 400B and 400D acquire the packet data 531 and 551, and the delay time information at the time when only 5 msec, which is the delay time Db and Dd, has passed from the frame output time. Then, the audio reproducers 400B and 400D output the divided audio data SB1 and SD1 at the time when the predetermined time U has passed from the time when the packet data 531 and 551 are acquired based on the delay time information, i.e., at the time when the predetermined time U and 5 msec have passed from the frame output time, with the use of the reproduction controller 433. Further, the audio reproducer 400A receives the packet data 521 and the delay time information at the time when only 4 msec, which is the delay time Da, has passed from the frame output time. Then, the audio reproducer 400A outputs the divided audio data SA1 at the time when the predetermined time U and 1 msec have passed from the time when the packet data 521 are acquired based on the delay time information, i.e., at the time when the predetermined time U and 5 msec have passed from the frame output time, with the use of the reproduction controller 433. Further, the audio reproducer 400C receives the packet data 541 and the delay time information at the time when 3 msec, which is the delay time Dc, has passed from the frame output time. Then, the audio reproducers 400C outputs the divided audio data SC1 at the time when the predetermined time U and 2 msec have passed from a time that the packet data 541 are acquired based on the delay time information, i.e., when the predetermined time U and 5 msec have passed from the frame output time, with the use of the reproduction controller 433. Accordingly, the data transmitting device 300 can cause the audio reproducers 400A, 400B, 400C and 400D to output the divided audio data SA1, SB1, SC1 and SD1, which are the header portions of the audio data SA, SB, SC and SD, at the same time.

Also, the data transmitting device 300 acquires audio data SA, SB, SC and SD, which are input from the AV data output equipment, using the audio data input unit 340. And the packet generator 360 timely transmits the divided audio data SAn, SBn, SCn and SDn of the audio data SA, SB, SC and SD, which are acquired by the audio data input unit 340, to the audio reproducer set 400. Owing to this, since it is not necessary to provide any storage for storing the audio data SA, SB, SC and SD to the data transmitting device 300, the configuration of the data transmitting device 300 can be simplified. Also, the cost of the data transmitting device 300 can be reduced as well as the data transmitting device 300 can be miniaturized.

The data transmitting device 300 is provided with the delay amount storage 320, which stores the delay times Dz calculated by the delay amount determiner 330. Then, the data transmitting device 300 generates the delay time information based on the differential times Tz calculated from the differential times Dz stored in the delay amount storage 320 with the use of the delay information generator 350. Owing to this, for example, when transmitting the divided audio data SA1, SB1, SC1 and SD1 of the audio data SA, SB, SC and SD of a new music composition, the data transmitting device 300 can use the differential times Tz, which are calculated from the delay times Dz stored in the delay amount storage 320, to generate the delay time information with the use of the delay information generator 350; and thus, it is possible to eliminate the processing to newly calculate the delay times Dz using the delay amount determiner 330. Accordingly, the processing to transmit the divided audio data SA1, SB1, SC1 and SD1 can be carried out more swiftly.

The data transmitting device 300 calculates the delay times Dz first using the delay amount determiner 330, and then, determines whether or not the preset times Ts are exceeded. And when it is determined as exceeded, the data transmitting device 300 calculates the delay times Dz again. Accordingly, the data transmitting device 300, even when the differential times Dz are altered, can generates the delay time information based on the differential times Tz calculated from the corresponding recalculated delay times Dz, and appropriately transmits the information to the audio reproducer set 400. Accordingly, the data transmitting device 300 can cause the audio reproducers 400A, 400B, 400C and 400D to carry out the processing to output the divided audio data SA1, SB1, SC1 and SD1 at the same time more appropriately. As for the cause why the delay times Dz alter, it is conceivable as one example. That is, for example, in such configuration that the network 200 includes a radio medium, between the data transmitting device 300 and, for example, the audio reproducer 400A, a foreign object is disposed altering the transmission path of the frame data 50n.

The data transmitting device 300, with the use of the delay amount determiner 330, generates the ACK request information and transmits the information to the audio reproducer set 400. Besides, the delay times Dz are calculated based on the necessary time from a time when the ACK request information are transmitted to a time when the ACKs are acquired. And when the audio reproducers 400A, 400B, 400C and 400D acquire the ACK request information using the ACK generator 431, the ACKs are made to generate and transmitted to the data transmitting device 300. Owing to this, the delay amount determiner 330 can calculate the delay times Dz in such simple manner; i.e., by just recognizing that the necessary time from the time when the ACK request information is generated and transmitted to the audio reproducer set 400 to the time when the ACK is acquired. Accordingly, the processing to calculate the delay times Dz more swiftly. Also, the configuration of the delay amount determiner 330 can be simplified.

The data transmitting device 300, with the use of the packet generator 360, generates the packet data 52n, 53n, 54n and 55n stored with the divided audio data SAn, SBn, SCn and SDn, in which the audio data SA, SB, SC and SD are divided into a plurality of pieces of data, as well as the frame data 50n, 50(n+1), ... including the delay time information, and then transmits the data to the audio reproducer set 400. And, for example, using the reproduction controller 433, the audio reproducer 400A acquires the frame data 50n, 50(n+1), ... transmitted from the data transmitting device 300, and the packet data 52n, 52(n+1), ... are identified from the acquired frame data 50n, 50(n+1), ... . After that, the reproduction controller 433 acquires divided audio data SAn, SA(n+1), ... , stored in the packet data 52n, 52(n+1), ... . Further, the audio reproducers 400B, 400C and 400D are also provided with the same function as that of the audio reproducer 400A.

Owing to this, with one transmission of the frame data 50n using the packet generator 360, the data transmitting device 300 can cause the audio reproducers 400A, 400B, 400C and 400D to acquire the divided audio data SAn, SBn, SCn and SDn timely and simultaneously. Accordingly, compared to such configuration that the packet data 52n, 53n, 54n and 55n stored with the divided audio data SAn, SBn, SCn and SDn are transmitted independently, the number of the transmission of the data can be reduced; and thus, the processing load of the packet generator 360 can be reduced.

Further, the data transmitting device 300 transmits the frame data 50n including the divided audio data SAn, SBn, SCn and SDn, in which the audio data SA, SB, SC and SD are divided into a plurality of pieces, to the audio reproducer set 400. And for example, the audio reproducer 400A combines the divided audio data SAn, SA(n+1), ... acquired from the frame data 50n, 50(n+1), ... , with each other, and outputs the data from the data output section 432 as the audio data SA. Further, the audio reproducers 400B, 400C and 400D are also provided with the same function as that of the audio reproducer 400A. Therefore, since the data transmitting device 300 transmits the audio data SA, SB, SC and SD to the audio reproducer set 400 by dividing these data into a plurality of pieces, the data amount per one transmission to the audio reproducer set 400 can be reduced. Accordingly, the data transmitting device 300 can swiftly transmits the audio data SA, SB, SC and SD to the audio reproducer set 400 even when the network 200 is, for example, in congestion.

For example, the audio reproducer 400A recognizes the order of the divided audio data SAn in the audio data SA based on, for example, the segment number 52nD of the packet data 52n using the reproduction controller 433. The divided audio data SAn, SA(n+1), ... are combined with each other in accordance with the recognized order to generate the audio data SA. Owing to this, the reproduction controller 433 can generate the audio data SA from the divided audio data SAn, SA(n+1), ... in such a simple manner as just referring to the segment number 52nD of the packet data 52n. Accordingly, the processing to generate the audio data SA from the divided audio data SAn, SA (n+1) ... can be carried out more swiftly.

### [Modification of Embodiment]

The present invention is not limited to the above described embodiments, but the following modifications are included therein within a range where the object of the present invention can be achieved.

The following configuration has been exemplified; i.e., the audio data input unit 340 for acquiring the audio data SA, SB, SC and SD, which are input from the AV data output equipment, is provided to the data transmitting device 300. However, for example, the following configuration may be employed. That is, in place of providing the audio data input unit 340, such configuration that, for example, a storage for storing the AV data is provided, and the packet generator 360 transmits the audio data SA, SB, SC and SD of the AV data stored in the storage to the audio reproducer set 400, may be employed. By adopting the configuration as described above, the process to connect between the AV data output equipment and the audio data input unit 340 can be eliminated resulting in an enhanced user-friendliness of the data transmitting device 300.

The following configuration has been exemplified; i.e., in the packet generator 360 of the data transmitting device 300, all of the frame data 50n include the delay packet data 56n stored with the delay time information. However, the configuration is not limited thereto, but, for example, following configuration can be adopted. That is, only the frame data 501 may include the delay packet data 56n, while the frame data 502, 503, ... do not include the delay packet data 56n. According to the above configuration, since the data amount of the frame data 502, 503, ... can be reduced, thus the frame data 502, 503, ... can swiftly be transmitted to the audio reproducer set 400 even when the network 200 is, for example, in congestion. Further, since the capacity of the data storage 420 in the audio reproducer set 400 for storing the frame data 50n, can be reduced, the cost of the audio reproducer set 400 can be reduced.

The following configuration has been exemplified; i.e., the data transmitting device 300 is provided with the delay amount storage 320 for storing the delay times Dz. However, for example, the following configuration may be adopted. That is, in place of providing the delay amount storage 320, each time when the packet generator 360 carries out the processing for transmitting, for instance, the audio data SA, SB, SC and SD of a new music composition, the delay amount determiner 330 can calculate the delay times Dz, and the delay information generator 350 can generate the delay time information based on the calculated delay times Dz. By adopting the configuration as described above, since it is not necessary to provide the delay amount storage 320 to the data transmitting device 300, the configuration of the data transmitting device 300 can be simplified. Also, the cost of the data transmitting device 300 can be reduced as well as the data transmitting device 300 can be miniaturized. Further, since the data transmitting device 300 transmits the divided audio data SA1, SB1, SC1 and SD1 as well as the delay time information generated based on the latest delay times Dz, the processing to cause the audio reproducers 400A, 400B, 400C and 400D to output the divided audio data SA1, SB1, SC1 and SD1 at the same time can be carried out more appropriately.

The following configuration has been exemplified; i.e., when the preset time Ts has elapsed after the delay times Dz are calculated, the delay amount determiner 330 in the data transmitting device 300 calculates the delay times Dz again. However, the configuration is not limited to the above, but, for example, the following configuration may be adopted. That is, such a configuration can be employed that the delay times Dz are calculated at each time when, for instance, the transmission of the audio data SA, SB, SC and SD of one or a plurality of music compositions is completed. By adopting such configuration, since the delay amount determiner 330 does not have to acquire the current. time timely from the timer, the load of the delay amount determiner 330 can be reduced.

Further, the following configuration may be adopted; i.e., once the delay times Dz are calculated, the delay times Dz are not calculated until, for example, the power supply is turned OFF and ON again. By adopting such configuration, since the delay amount determiner 330 can reduce the number of times for calculating the delay times Dz, the processing load of the delay amount determiner can be reduced.

By adopting such configuration, since it is possible to reduce the number of times when the delay amount determiner 330 is made to calculate the delay times Dz, the load of the delay amount determiner 330 can be reduced. The following configuration has been exemplified; i.e., the delay amount determiner 330 in the data transmitting device 300 calculates the delay times Dz based on the necessary time from the time when ACK request information is transmitted to the time when the ACKs are received. However, the configuration is not limited to the above, but, for example, the following configuration may be adopted. Also, it is not necessary to provide the audio reproducer set 400 with the ACK generator 431. Owing to this, the configuration of the data transmitting device 300 and the audio reproducer set 400 can be simplified.

The following configuration has been exemplified; i.e., for example, the reproduction controller 433 in the audio reproducer 400A recognizes the order of the divided audio data SAn, SA(n+1), ... based on, for example, the segment numbers 52nD, 52(n+1)D ... of the packet data 52n, 52(n+1), ... . And the divided audio data SAn, SA(n+1), ... may be combined with each other in accordance with the recognized order to generate the audio data SA. However, for example, such configuration may be adopted; i.e., for example, the divided audio data SAn, SA(n+1), ... are combined with each other based on the order the packet data 52n, 52(n+1), ... stored in the data storage 420 to generate the audio data SA. By adopting such configuration, for example, since it is not necessary to store the segment number 52nD in the packet data 52n, the data amount of the packet data 52n can be reduced. Owing to this, the generating process and the transmitting process of the frame data 50n can be carried out more swiftly.

Further, the following configuration has been exemplified; i.e., the data transmitting device 300 divides the audio data SA, SB, SC and SD to a plurality of divided audio data SAn, SBn, SCn and SDn, and these divided audio data SAn, SBn, SCn and SDn etc. are transmitted to the audio reproducer set 400 stored with frame data 50n. However, for example, the following configuration may be adopted.

That is, such a configuration is applicable that all of the audio data SA, SB, SC and SD as well as the delay time information are transmitted to the audio reproducers 400A, 400B, 400C and 400D without dividing the audio data SA, SB, SC and SD by the packet generator 360. Further, such a configuration may also be applicable that the audio data SA, SB, SC and SD as well as the delay time information are respectively transmitted to the corresponding audio reproducers 400A, 400B, 400C and 400D. In such configuration also, owing to substantially the same effect as that in the above-described embodiment, the data transmitting device 300 can cause the audio reproducers 400A, 400B, 400C and 400D to receive the audio data SA, SB, SC and SD at the substantially same time. Further, since there is no need to provide a function of generating the divided audio data SAn, SBn, SCn and SDn in the packet generator 360 of the data transmitting device 300, the configuration of the packet generator 360 can be simplified. Furthermore, according to the configuration that the audio data SA, SB, SC and SD as well as the delay time information are respectively transmitted to the corresponding audio reproducers 400A, 400B, 400C and 400D, the data amount to be received by the audio reproducer set 400 can be reduced, compared to the configuration that all of the audio data SA, SB, SC and SD as well as the delay time information are transmitted thereto. Therefore, since the capacity of the data storage 420 in the audio reproducer set 400, in which the audio data SA, SB, SC and SD respectively being corresponding to the audio reproducers 400A, 400B, 400C and 400D, etc. are stored, can be reduced, and thus the cost of the audio reproducer set 400 can be reduced.

In contrast, such a configuration is applicable that the packet data 52n, 53n, 54n and 55n as well as the delay time information are respectively transmitted to the corresponding audio reproducers 400A, 400B, 400C and 400D without the packet data 52n, 53n, 54n and 55n included in the frame data 50n by the packet generator 360. With this configuration, according to the substantially same action as the above-described embodiment, the data transmitting device 300 still causes the audio reproducers 400A, 400B, 400C and 400D to output the divided audio data SA1, SB1, SC1 and SD1, which are the header portions of the audio data SA, SB, SC and SD at the same time. Also, compared to such configuration that the packet data 52n, 53n, 54n and 55n are transmitted as the frame data 50n, the data amount to be received by the audio reproducer set 400 can be reduced. Therefore, since the capacity of the data storage 420 in the audio reproducer set 400, in which the packet data 52n, 53n, 54n and 55n respectively being corresponding to the audio reproducers 400A, 400B, 400C and 400D, etc. are stored, can be reduced, and thus the cost of the audio reproducer set 400 can be reduced.

The following reproduction system 100 has been exemplified; i.e., the audio data SA, SB, SC and SD are output from each of the audio reproducers 400A, 400B, 400C and 400D at the same time. However, the configuration is not limited to the above, but, for example, the following configuration may be adopted. That is, in addition to the delay times Dz of the audio reproducers 400A, 400B, 400C and 400D, the delay amount determiner 330 in the data transmitting device 300 calculates the delay time De of the image reproducer. Then, the delay information generator 350 generates the delay time information based on the delay time De and the delay times Dz. Then, the packet generator 360 generates the packet data 52n, 53n, 54n and 55n, which is the packet data stored with the divided image data with the image data divided into a plurality of pieces, as well as the frame data 50n including the delay time information. After that, the generated frame data 50n may be transmitted to the audio reproducers 400A, 400B, 400C and 400D and the image reproducer. By adopting such configuration, the audio data SA, SB, SC and SD, and the image data can be output from the audio reproducers 400A, 400B, 400C the 400D and the image reproducer at the same time. Owing to this, the versatility of the reproduction system 100 can be further increased.

Further, the present invention may be applied to such configuration that control signals as data, which are transmitted from a control signal transmitting device as data transmitting device, are output from the controller as the plurality of data output devices at the same time.

Each of the above-described functions is achieved as the programs. However, for example, the functions may be built in a piece of hardware such as a circuit board, or in one device such as IC (Integrated Circuit). Any mode of the configuration is available. When such configuration that the functions are read out from a programs or a separate recording medium is adopted, since they are easy to handle, the usage range thereof can be expanded easily.

Particular structures and steps for carrying out the present invention may be appropriately modified to another structure and the like within a range that the object of the present invention is achieved.

### [Effect of Embodiment]

As described above, according to the above described embodiment, using the delay amount determiner 330, the data transmitting device 300 in the reproduction system 100 performs the calculation as described below. That is, the delay time Da of the audio reproducer 400A is calculated as, for example, 4 msec; the delay times Db and Dd of the audio reproducers 400B and 400D are calculated as, for example, 5 msec; and the delay time Dc of the audio reproducer 400C is calculated as, for example, 3 msec. Then, the delay time information is generated at the delay information generator 350 based on the differential times Tz calculated from the delay times Dz. More specifically, the delay information generator 350 generates such delay time information, including information that requests on the audio reproducer 400A to output the divided audio data SA1 at the time when the predetermined time U and 1 msec, which is the differential time Ta, have passed from the time when the divided audio data SA1 are acquired; information that request on the audio reproducers 400B and 400D to output the divided audio data SB1 and SD1 at the time when the predetermined time U and 0 msec, which is the differential times Tb and Td, have passed from the time when the divided audio data SB1 and SD1 are acquired, i.e., at the time when the predetermined time U has passed from the time when the divided audio data SB1 and SD1 are acquired; and information that requests on the audio reproducer 400C to output the divided audio data SC1 at the time when the predetermined time U and 2 msec, which is the differential time Tc, have passed from the time when the divided audio data SC1 are acquired. Then, the packet data 521, 531, 541 and 551 stored with the divided audio data SA1, SB1, SC1 and SD1, and the delay time information are transmitted to the audio reproducer set 400.

Consequently, the audio reproducers 400B and 400D receive the packet data 531 and 551, and the delay time information at the time when only 5 msec, which is the delay time Db and Dd, have passed from the frame output time. Then, the reproduction controller 433 outputs the divided audio data SB1 and SD1 from the data output section 432 at the time based on the delay time information, i.e., at the time when the predetermined time U and 5 msec have elapsed from the frame output time. Further, the audio reproducer 400A receives the packet data 521 and the delay time information at the time when 4 msec, which is the delay time Da, has passed from the frame output time. Then, the reproduction controller 433 outputs the divided audio data SA1 from the data output section 432 at the time based on the delay time information, i.e., at the time when the predetermined time U and 5 msec have elapsed from the frame output time. Further, the audio reproducer 400C receives the packet data 541 and the delay time information at the time when 3 msec, which is the delay time Dc, has passed from the frame output time. Then, the reproduction controller 433 outputs the divided audio data SC1 from the data output section 432 at the time based on the delay time information, i.e., at the time when the predetermined time U and 5 msec have elapsed from the frame output time. Accordingly, the data transmitting device 300 can cause the audio reproducers 400A, 400B, 400C and 400D to output the divided audio data SA1, SB1, SC1 and SD1, which are the header portions of the audio data SA, SB, SC and SD, at the same time.

Further, the data transmitting device 300 can cause the audio reproducers 400B and 400D to receive the packet data 531 and 551, and the delay time information at the time when only 5 msec, which is the delay time Db and Dd, have passed from the frame output time. Then, the divided audio data SB1 and SD1 can be transmitted to the audio reproducers 400B and 400D at the time based on the delay time information, i.e., at the time when the predetermined time U and 5 msec have elapsed from the frame output time. Further, the data transmitting device 300 can cause the audio reproducer 400A to receive the packet data 521 and the delay time information at the time when only 4 msec, which is the delay time Da, has passed from the frame output time. Then, the divided audio data SA1 can be transmitted to the audio reproducer 400A at the time based on the delay time information, i.e., at the time when the predetermined time U and 5 msec have elapsed from the frame output time. Further, the data transmitting device 300 can cause the audio reproducer 400C to receive the packet data 541 and the delay time information at the time when only 4 msec, which is the delay time Dc, has passed from the frame output time. Then, the divided audio data SC1 can be output to the audio reproducer 400C at the time based on the delay time information, i.e., at the time when the predetermined time U and 5 msec have elapsed from the frame output time. Accordingly, the data transmitting device 300 can cause the audio reproducers 400A, 400B, 400C and 400D to output the divided audio data SA1, SB1, SC1 and SD1, which are the header portions of the audio data SA, SB, SC and SD, at the same time.

## Claims

1. A data output device for outputting data transmitted via a network, comprising:
an output information acquirer that acquires the data and delay time information about a delay time determined based on a transmission time of the data; and
an output controller that causes the data to be output at the time based on the delay time of the delay time information.

2. The data output device according to claim 1,
wherein the data includes a plurality of divided data, and
wherein the output controller causes the plurality of divided data to be output sequentially at the time based on the delay time.

3. The data output device according to claim 2,
wherein the divided data are associated with order information about the order, by which the divided data are output, and
wherein the output controller causes the plurality of divided data to be output sequentially in accordance with the order based on the order information associated with each piece of the divided data.

4. A data transmitting device that transmits data via a network to a plurality of data output devices, comprising:
a transmission time calculating section for calculating a transmission time of the data for each of the data output devices;
a delay information generator that generates the delay time information based on the transmission time; and
a transmission controller that transmits the data and the delay time information to each of the data output devices via the network.

5. The data transmitting device according to claim 4, further comprising:
a data acquiring section for acquiring the data,
wherein the transmission controller transmits the data acquired by the data acquiring section to each of the data output devices via the network.

6. The data transmitting device according to claim 4 or 5, further comprising:
a storage for storing the transmission time,
wherein the transmission time calculating section causes the storage to store the transmission time, and
wherein the delay information generator generates the delay time information based on the transmission time stored in the storage.

7. The data transmitting device according to any one of claims 4 to 6, wherein the transmission time calculating section determines whether or not a predetermined time has passed from the time when the transmission time has been calculated, and when determining that the predetermined time has passed, calculates the transmission time again.

8. The data transmitting device according to any one of claims 4 to 7, wherein the transmission time calculating section generates confirmation request information that requests transmission of reception confirmation information, transmits the generated confirmation request information to each of the data output devices via the network, receives the reception confirmation information transmitted from each of the data output devices via the network, and calculates the transmission time of the data to each of the data output devices, based on difference between the time when the confirmation request information has been transmitted and the time when the reception confirmation information has been received.

9. A data processing system, comprising:
the data output devices according to any one of claims 1 to 3; and
the data transmitting device according to any one of claims 4 to 7 connected to the data output devices via the network,
wherein the output information acquirer acquires the data and the delay time information transmitted from the data transmitting device via the network.

10. A data processing system, comprising:
the data output devices according to any one of claims 1 to 3; and
the data transmitting device according to claim 8 connected to the data output devices via the network,
wherein each of the data output devices include a confirmation information generator that, when receiving the confirmation request information transmitted from the data transmitting device via the network, generates the reception confirmation information and transmits the information to the data transmitting device via the network.

11. A data output method for outputting data to be transmitted via a network by a plurality of data output devices respectively, the method comprising the steps of:
acquiring the data and delay time information about a delay time determined based on a transmission time of the data; and
outputting the data at the time based on the delay time of the delay time information.

12. A data transmitting method for transmitting data via a network to a plurality of data output devices that output the data at the time based on a delay time determined based on a transmission time of the data, the method comprising the steps of:
calculating the transmission time of the data to each of the data output devices;
generating delay time information about the delay time based on the transmission time; and
transmitting the data and the delay time information to each of the data output devices via the network.

13. A data processing method for causing data, which is transmitted from a data transmitting device via a network, to be transmitted to each of a plurality of data output devices, the method comprising the steps of:
operating the data transmitting device to calculate a transmission time of the data to each of the data output devices;
operating the data transmitting device to generate delay time information about a delay time determined based on the transmission time;
operating the data transmitting device to transmit the data and the delay time information to each of the data output devices via the network;
operating each of the data output devices to acquire the data and the delay time information transmitted from the data transmitting device via the network; and
operating each of the data output devices to output the data at the time based on the delay time of the delay time information.

14. A data output program executing the data output method according to claim 11 by a computer.

15. A data transmitting program executing the data transmitting method according to claim 12 by a computer.

16. A data processing program executing the data processing method according to claim 13 by a computer.

17. A recording medium storing the data output program according to claim 14 in a manner readable by a computer.

18. A recording medium storing the data transmitting program according to claim 15 in a manner readable by a computer.

19. A recording medium storing the data processing program according to claim 16 in a manner readable by a computer.
